# NOUVEAU FASCICULE DE BREVET EUROPEEN

(11) **EP 1 636 478 B2**
(45) Date de publication et mention de la décision concernant l'opposition: **29.05.2013**
(45) Mention de la délivrance du brevet: 28.02.2007
(21) Numéro de dépôt: 04767444.5
(22) Date de dépôt: 24.06.2004
(51) Int. Cl.: F02M 25/07, F02B 29/04

(54) **MODULE DE REFROIDISSEMENT DE L`AIR DE SURALIMENTATION ET DES GAZ RECIRCULES D`UN MOTEUR A COMBUSTION INTERNE DE VEHICULE AUTOMOBILE**
MODUL ZUR KÜHLUNG VON LADELUFT UND RÜCKGEFÜHRTEN GASEN VOM VERBRENNUNGSMOTOR EINES KRAFTFAHRZEUGS
MODULE FOR COOLING THE CHARGE AIR AND RECIRCULATED GASES FROM THE INTERNAL COMBUSTION ENGINE OF A MOTOR VEHICLE

(30) Priorité: 25.06.2003 FR 0307674; 28.11.2003 FR 0314044
(43) Date de publication de la demande: 22.03.2006
(73) Titulaire: VALEO THERMIQUE MOTEUR S.A., 78321 La Verrière (FR)
(72) Inventeur: MARTINS, Carlos, F-78150 Le Chesnay (FR); CHANFREAU, Matthieu, F-78650 Saulx Marchais (FR); POITIER, Michel, F-78120 Rambouillet (FR)
(86) Numéro de dépôt international: PCT/FR2004/001592
(87) Numéro de publication internationale: WO 2005/001271

(56) Documents cités:
- DE-A- 4 240 239
- DE-A- 19 853 455
- FR-A- 2 835 884
- JP-A- 2002 310 007

## Description

L'invention concerne un module de refroidissement constitué d'un refroidisseur d'air de suralimentation et d'un refroidisseur des gaz d'échappement recirculés, le refroidisseur d'air de suralimentation comprenant une boîte d'entrée pour l'air à refroidir et une boîte de sortie pour l'air refroidi, le refroidisseur des gaz d'échappement recirculés comprenant une boîte d'entrée pour les gaz d'échappement à refroidir et une boîte de sortie pour les gaz d'échappement recirculés refroidis, cette boîte possédant un passage de sortie des gaz d'échappement recirculés.

Afin d'augmenter la puissance spécifique des moteurs thermiques de véhicules automobiles, il est connu de les alimenter en air d'alimentation comprimé à l'aide d'un compresseur entraîné par les gaz d'échappement. Toutefois, cette compression a pour effet de porter l'air d'alimentation à une température élevée. Pour cette raison, l'air d'alimentation doit être refroidi préalablement à son introduction dans les chambres de combustion du moteur. Ce refroidissement s'effectue de manière classique dans un refroidisseur d'air, appelé refroidisseur d'air de suralimentation.

Par ailleurs, afin de répondre à des normes de pollution de plus en plus strictes, il est connu de recirculer une partie des gaz d'échappement et de les mélanger aux gaz d'admission frais afin d'abaisser la température de combustion dans le moteur. Toutefois, ces gaz d'échappement recirculés sont à une température élevée, pouvant atteindre 500°C environ, de telle sorte qu'ils doivent être refroidis également. De manière classique, ce refroidissement se fait par un passage au travers d'un refroidisseur des gaz d'échappement recirculés.

Afin de réduire l'encombrement de ces deux refroidisseurs, il est connu (DE 19 853 455) de les loger dans un boîtier unique. Ce document décrit un module constitué d'un refroidisseur d'air de suralimentation logé dans un boîtier et d'un refroidisseur d'air des gaz d'échappement recirculés montés sur le refroidisseur d'air de suralimentation. La principale caractéristique de ce module est la présence d'un dispositif en forme d'entonnoir disposé à l'interface des sorties de l'air d'alimentation et des gaz recirculés. La sortie des gaz d'échappement recirculés est en aval de la sortie de l'air. Les deux refroidisseurs comportent chacun leur propre raccordement au circuit de refroidissement principal du véhicule.

Toutefois, un module de refroidissement de ce type ne permet pas une régulation en température de l'air d'admission, et plus particulièrement du mélange d'air et de gaz recirculés. Les échangeurs sont dimensionnés de façon à ce que, dans les pires cas rencontrés en roulage, les températures de sortie ne dépassent pas un niveau défini. Cependant, dans la majorité des autre cas, la température d'entrée des gaz à leur admission dans les chambres de combustion du moteur, est subie et non régulée.

Pour répondre à des normes futures de pollution de plus en plus contraignantes, on ressent le besoin de réguler de manière plus précise la température du mélange d'air d'admission et des gaz recirculés admis dans le moteur. L'invention a précisément pour objet un module de refroidissement qui répond à ces objectifs.

Ces buts sont atteints, conformément à l'invention, grâce à un module selon la revendication 1.

Grâce à cette caractéristique, le mélange de l'air d'admission et des gaz recirculés s'effectue bien en amont des tubulures d'admission. Les gaz peuvent se mélanger et par conséquent leur température s'homogénéiser, de telle sorte que la température du mélange est abaissée.

Dans une réalisation préférée, le refroidisseur des gaz recirculés comporte une entrée de dérivation des gaz recirculés permettant à ces derniers d'arriver dans la boîte de sortie du refroidisseur de l'air de suralimentation sans avoir été refroidis et au moins une vanne de répartition des gaz recirculés les répartissant en proportions réglables entre la boîte d'entrée du refroidisseur des gaz recirculés et l'entrée de dérivation des gaz recirculés.

Grâce à ces caractéristiques, on peut jouer sur la proportion d'air d'alimentation refroidi et non refroidi ainsi que sur la proportion des gaz recirculés refroidis et non refroidis. Cela permet une gestion fine de la température finale du mélange de manière à se rapprocher le plus possible d'une valeur idéale afin d'améliorer la combustion et de réduire la pollution.

Dans une réalisation préférée, le refroidisseur de l'air de suralimentation comporte un déflecteur des gaz d'échappement recirculés disposé face au passage de sortie des gaz recirculés afin de diriger ces gaz vers la boîte de sortie du refroidisseur de l'air de suralimentation.

De préférence, le déflecteur des gaz d'échappement recirculés est fixé sur une paroi d'extrémité du refroidisseur d'air de suralimentation.

Grâce à cette caractéristique on évite l'encrassage du faisceau d'échange de chaleur du refroidisseur d'air de suralimentation par les suies contenues dans les gaz d'échappement recirculés.

Des caractéristiques optionnelles complémentaires ou alternatives de l'invention sont énumérées ci-après :
- le refroidisseur d'air de suralimentation comporte une enveloppe logeant un faisceau d'échange de chaleur, cette enveloppe comportant une face de fixation présentant une surface agrandie sur laquelle le refroidisseur des gaz recirculés est fixé. Cette caractéristique permet un montage plus aisé du refroidisseur des gaz recirculés ;
- l'enveloppe du refroidisseur d'air de suralimentation est fermée par une boîte d'entrée et une boîte de sortie moulées en matière plastique ou en métal ;
- le refroidisseur des gaz recirculés comporte une enveloppe constituée de deux demi-carters qui logent un faisceau d'échange de chaleur et qui délimitent de part et d'autre de ce faisceau des espaces libres afin de constituer des boîtes d'entrée et de sortie pour les gaz recirculés ;
- le faisceau d'échange de chaleur des gaz recirculés est constitué par un empilement de plaques qui déterminent entre elles des canaux de circulation des gaz à refroidir et des canaux de circulation d'un liquide de refroidissement, chaque canal de circulation des gaz à refroidir étant compris entre deux canaux de circulation du liquide de refroidissement ;
- la face de fixation du refroidisseur d'air de suralimenta tion comporte une platine munie d'un point de fixation du refroidisseur des gaz recirculés, cette platine comportant un passage d'entrée et un passage de sortie pour un liquide de refroidissement qui circule en parallèle dans le refroidisseur des gaz recirculés et dans le refroidisseur de l'air de suralimentation ;
- l'enveloppe du refroidisseur des gaz d'échappement recirculés comporte deux pattes de fixation fixées respectivement à la boîte d'entrée et à la boîte de sortie du refroidisseur d'air de suralimentation ;
- le refroidisseur d'air de suralimentation et le refroidisseur des gaz recirculés sont assemblés en une seule opération de brasage et ils sont également assemblés l'un à l'autre durant cette même opération de brasage.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue éclatée en perspective d'un module de refroidissement conforme à l'invention ;
- la figure 2 est une vue, partiellement en coupe, du module de refroidissement de la figure 1 ;
- la figure 3 est une vue en perspective du module des figures 1 et 2 montrant le raccordement des canalisations de dérivation de l'air d'alimentation et des gaz d'échappement recirculés ; et
- la figure 4 est un détail de la figure 2 dans une variante de réalisation.

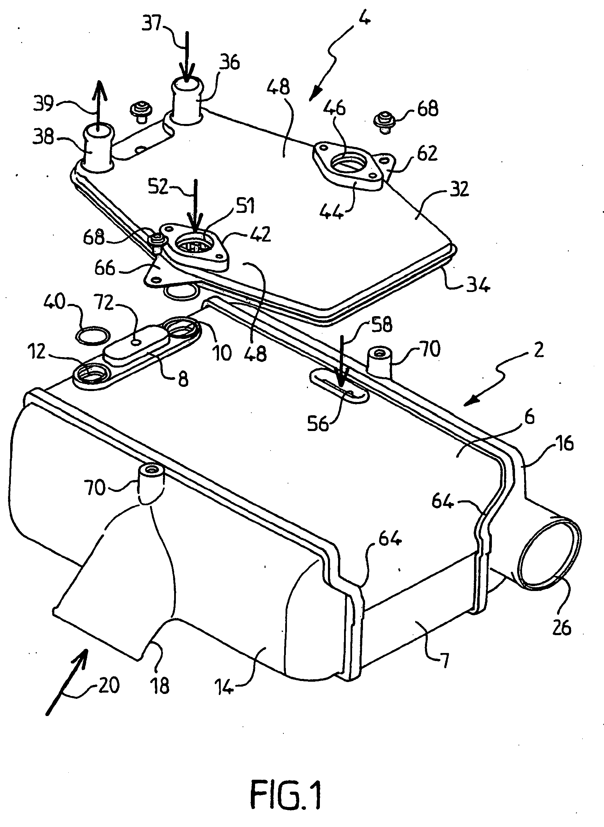

Le module de refroidissement représenté sur la figure 1 est constitué d'un refroidisseur de l'air de suralimentation désigné par la référence générale 2 et d'un refroidisseur des gaz d'échappement recirculés désigné dans son ensemble par la référence 4. Il est destiné à équiper un véhicule automobile animé par un moteur à combustion interne.

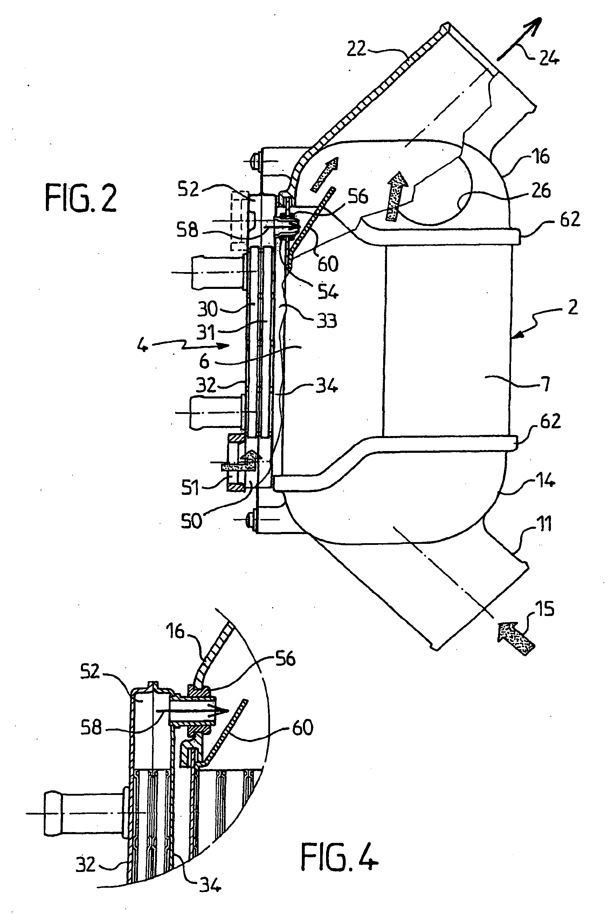

Le refroidisseur d'air de suralimentation 2 comporte un faisceau d'échange de chaleur (non visible sur les figures 1 et 2) logé dans une enveloppe constituée de deux demi-coquilles, à savoir une demi-coquille supérieure 6 et une demi-coquille inférieure 7. Le faisceau d'échange de chaleur peut être réalisé de diverses manières. Il peut notamment être constitué de plaques de forme générale rectangulaire embouties et comportant des reliefs qui déterminent des canaux de circulation pour un liquide de refroidissement, généralement de l'eau et des canaux de circulation de l'air d'alimentation du moteur. Dans l'exemple, le faisceau présente une forme allongée. Le liquide de refroidissement circule selon la grande dimension de cette forme allongée, tandis que l'air d'alimentation traverse le faisceau d'échange de chaleur dans sa petite dimension. Le liquide de refroidissement et l'air d'alimentation circule donc à courants croisés.

De manière classique, le faisceau d'échange de chaleur comporte une boîte, également appelée collecteur d'entrée, et une autre boîte, également appelée collecteur de sortie, pour le liquide de refroidissement. Le collecteur d'entrée et le collecteur de sortie sont disposés, de manière connue, le long d'un petit côté des plaques du faisceau à l'intérieur de l'enveloppe formée par les demi-coquilles 6 et 7. Ils ne sont par conséquent pas visibles sur la figure mais, étant donné que cette réalisation est classique, elle ne sera pas décrite plus en détail. Une platine 8 est montée sur la face supérieure de la demi-coquille 6. Elle comporte une entrée 10 et une sortie 12 pour le liquide de refroidissement. L'entrée 10 est raccordée au collecteur d'entrée et la sortie 12 est raccordée au collecteur de sortie.

A l'une de leurs extrémités, les demi-coquilles 6 et 7 comportent une boîte d'entrée 14 et une boîte de sortie 16 pour l'air de suralimentation. La boîte d'entrée 14 comporte une tubulure d'entrée 18 par laquelle l'air de suralimentation pénètre comme schématisé par la flèche 20. La boîte de sortie 16 comporte une tubulure de sortie 22 par laquelle l'air de suralimentation quitte le refroidisseur d'air de suralimentation, comme schématisé par la flèche 24 (voir figure 2). La boîte de sortie 16 comporte également une entrée de dérivation 26 de l'air de suralimentation.

Le refroidisseur des gaz d'échappement recirculés 4 comporte un faisceau d'échange de chaleur désigné généralement par la référence 30 (figure 2). Comme le faisceau d'échange de chaleur du refroidisseur d'air de suralimentation, le faisceau 30 est constitué de plaques de forme générale rectangulaire allongée, embouties de manière à comporter des reliefs déterminant des canaux de circulation pour les gaz d'échappement recirculés et pour un fluide de refroidissement, généralement de l'eau glycolée, les gaz recirculés et le liquide de refroidissement circulant ici également à courants croisés.

Le faisceau 30 est contenu à l'intérieur d'une enveloppe constituée d'un demi-carter supérieur 32 et d'un demi-carter inférieur 34 (selon la figure 1). Une tubulure d'entrée 36 et une tubulure de sortie 38 pour le liquide de refroidissement sont prévues sur le demi-carter supérieure 32. Le liquide de refroidissement pénètre par la tubulure 36, comme schématisé par la flèche 37 et se répartit dans les canaux de circulation du faisceau d'échange de chaleur 30 avant de quitter l'échangeur par la tubulure de sortie 38 comme schématisé par la flèche 39.

En outre, les tubulures 36 et 38 servent également à la circulation du fluide de refroidissement dans le refroidisseur d'air de suralimentation 2. A cet effet, lorsque le refroidisseur des gaz recirculés 4 est monté sur le refroidisseur d'air de suralimentation 2, les tubulures 36 et 38 communiquent respectivement avec l'entrée 10 et la sortie 12 du fluide de refroidissement du refroidisseur 2. Ainsi, les refroidisseurs 2 et 4 sont alimentés en parallèle par le même fluide de refroidissement et les tubulures d'entrée 36 et 38 sont communes aux deux échangeurs. Dans l'exemple représenté des joints d'étanchéité toriques 40 assurent l'étanchéité entre la platine 8 et le demi-carter inférieur 34 du refroidisseur 4. On trouve également sur le demi-carter supérieur 32 une bride 42 pour le raccordement d'une canalisation d'amenée des gaz recirculés à refroidir, ainsi qu'une bride 44 comportant une entrée 46 de dérivation des gaz recirculés.

Comme on le remarque, la forme des demi-carters 32 et 34 n'est pas rectangulaire mais comporte des prolongements 48 situés de part et d'autre de ses côtés allongés. Les prolongements 48 déterminent entre la paroi intérieure des demi carters 32 et 34 et le faisceau d'échange de chaleur 30 des espaces libres qui constituent respectivement une boîte d'entrée et une boîte de sortie pour les gaz d'échappement recirculés.

Ainsi, ces gaz pénètrent dans la boîte d'entrée 50 par l'ouverture circulaire 51 prévue dans la bride 42, comme schématisé par la flèche 52 (voir figure 2). Après la traversée du faisceau d'échange de chaleur 30, la sortie des gaz d'échappement refroidis s'effectue par un passage de sortie 54 prévu dans le demi-carter intérieur 34. Le passage de sortie 54, qui présente une forme aplatie, traverse la paroi supérieure de la demi-coquille 6 par un trou de forme allongée comportant un joint d'étanchéité 56, comme schématisé par la flèche 58 (figure 1). Le passage 54 de sortie des gaz recirculés débouche directement dans la boîte de sortie 16 du refroidisseur d'air de suralimentation 2. Ainsi, les gaz d'échappement recirculés et l'air de suralimentation se mêlent directement dans la boîte de sortie 16.

Comme on peut le voir plus particulièrement sur la figure 2, dans l'exemple de réalisation préféré, un déflecteur 60 fixé à la paroi supérieure de l'enveloppe du refroidisseur d'air de suralimentation est placé en regard du passage de sortie 54 des gaz recirculés. Le déflecteur 60 a pour but de dévier les gaz recirculés vers le haut de la boîte de sortie 16 afin d'éviter que les suies contenues dans ces gaz d'échappement n'encrassent le faisceau d'échange de chaleur du refroidisseur d'air de suralimentation 4.

La bride 44 sert à l'entrée des gaz recirculés de dérivation. Ces gaz sont admis directement à l'intérieur de la boîte de sortie 52 du refroidisseur 4 des gaz d'échappement recirculés. En conséquence, ils ne traversent pas le faisceau d'échange de chaleur 30. Ils ne sont pas refroidis. Il pénètrent directement dans la boîte de sortie 16 sans avoir traversé le faisceau 30.

Comme on le remarque sur les figures 1 et 2, la hauteur de la face supérieure de la demi-coquille 6 est plus grande que la hauteur de la face intérieure de la demi-coquille 7. La boîte d'entrée 14 et la boîte de sortie 16 comportent chacune un talon 52 dans lequel est prévue une fente dans laquelle vient se loger la tranche des demi-coquilles 6 et 7. Les boîtes d'entrée 14 et de sortie 16 présentent chacune un décrochement 64 de manière à s'adapter à la forme de la demi-coquille supérieure 6. Le fait que la surface de la face supérieure de la demi coquille 6 est ainsi agrandie, est avantageux parce qu'il permet de rapporter plus aisément le refroidisseur des gaz d'échappement recirculés 4. Dans l'exemple représenté, ce dernier comporte deux pattes de fixation 66 qui permettent de le fixer au moyen de vis 68 sur des bossages 70 prévus respectivement dans la boîte d'entrée 14 et la boîte de sortie 16. Un troisième point de fixation 72, également au moyen d'une vis 68 est prévu sur la platine 8.

En variante de réalisation, le refroidisseur des gaz d'échappement recirculés, et plus particulièrement le refroidisseur d'air de suralimentation, pourrait être assemblé entièrement par brasage. Dans ce cas, les boîtes d'entrée 14 et de sortie 16 sont réalisées en aluminium et elles sont assemblées aux demi-coquilles 6 et 7 en une seule opération au moment du brasage. Il est également possible d'assembler chacun des refroidisseurs 2 et 4 entièrement par brasage en une seule opération mais en outre, de les fixer l'un sur l'autre par brasage dans le même temps. Dans ce cas, les joints d'étanchéité toriques 40, le joint d'étanchéité 56 ainsi que la platine 8 sont supprimés.

Dans la réalisation préférée représentée, chacun des canaux de circulation 31 parcourus par les gaz d'échappement recirculés portés à une température élevée (de 400°C à 500°C) est pris en sandwich entre deux lames d'eau 33. Ainsi, le demi-carter supérieur 32 et le demi-carter inférieur 34 ne sont pas directement au contact des gaz recirculés à haute température, mais sont refroidis par une circulation d'eau. Il est par conséquent possible de les réaliser dans un matériau tel que l'aluminium, moins coûteux et plus aisé à mettre en forme que l'acier inoxydable, mais résistant moins bien à une température élevée.

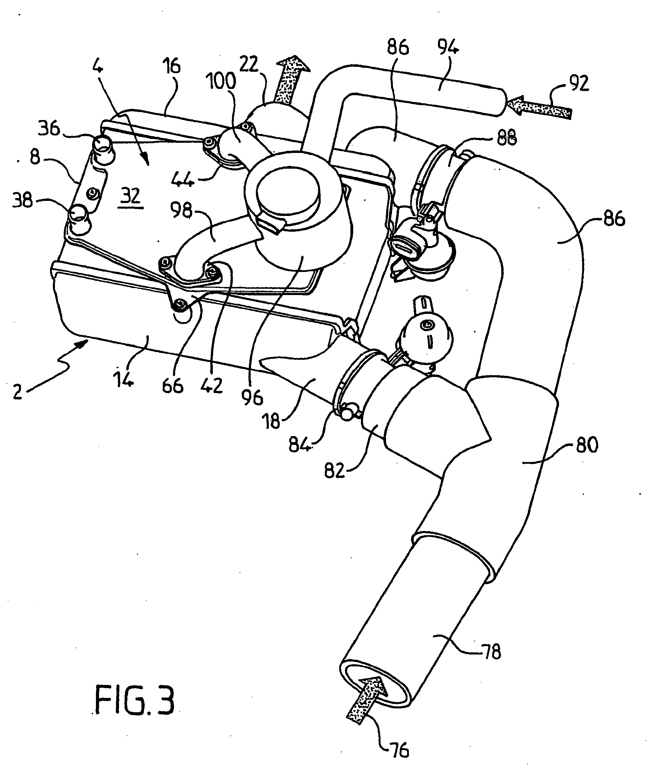

On a représenté sur la figure 3 une vue en perspective montrant le raccordement des canalisations de dérivation à un module de refroidissement conforme à l'invention. L'air de suralimentation schématisé par la flèche 76 est amené par une canalisation 78 jusqu'à un raccord en Y 80. Une vanne de débit d'air 84 est interposée entre un manchon 82 et la tubulure d'entrée 18 de la boîte collectrice 14. On remarque que dans ce mode de réalisation, contrairement aux figures 1 et 2, la tubulure d'entrée 18 de l'air de suralimentation est disposée à une extrémité (l'extrémité droite selon la figure) de la boîte d'entrée 14. Une autre branche du raccord en Y est raccordée à une canalisation 86 de dérivation d'air de suralimentation qui aboutit à une vanne de dérivation d'air de suralimentation 88. La vanne 88 est montée sur la tubulure d'entrée d'air de dérivation 26.

Grâce à ces raccordements, il est possible de faire varier à volonté les proportions d'air de suralimentation refroidi et non refroidi qui traversent le refroidisseur d'air de suralimentation. Si l'on souhaite augmenter cette proportion, on ouvre plus grand la vanne de débit d'air 84 et simultanément on ferme la vanne de dérivation d'air 88. Ainsi, le mélange de l'air refroidi et de l'air non refroidi qui se fait directement dans la boîte de sortie 14 diminuera de température. Si, au contraire, on veut augmenter la température de sortie du mélange, on ouvrira la vanne de dérivation d'air 88 et on fermera la vanne de débit d'air 84 dans une même proportion. Ainsi, la quantité d'air de suralimentation qui pénétrera directement dans la boîte de sortie 16 sans avoir été refroidie augmentera de sorte que la température du mélange augmentera également.

Les gaz d'échappement recirculés, schématisés par la flèche 92, pénètrent dans une canalisation 94 d'amenée des gaz d'échappement recirculés jusqu'à une vanne de répartition de débit 96. La vanne 96 permet de répartir les gaz recirculés 92 soit entre une canalisation 98 qui les amène jusqu'à la boîte d'entrée du refroidisseur des gaz recirculés, soit vers une canalisation 100 qui les amène directement dans la boîte de sortie du refroidisseur 4 des gaz recirculés.

Comme on peut le voir plus particulièrement sur la figure 2, à leur sortie de la boîte de sortie 52 du refroidisseur 4, les gaz recirculés pénètrent directement dans la boîte d'entrée 16 du refroidisseur d'air de suralimentation dans laquelle ils se mélangent entre eux en même temps qu'ils se mélangent à l'air d'alimentation du moteur.

On peut ainsi jouer sur quatre paramètres pour faire varier la température finale du mélange, à savoir le débit d'air de suralimentation refroidi, le débit d'air d'alimentation non refroidi, le débit des gaz recirculés refroidis et le débit des gaz recirculés non refroidis. Ces quatre débits gazeux sont à des températures différentes. La température des gaz recirculés non refroidis est la plus élevée (300°C à 500°C), tandis que la température de l'air de suralimentation refroidie est la plus basse (environ 20-70°C). En faisant varier la proportion de chacun de ces flux dans le mélange final, on peut donc régler de manière fine sa température.

Dans la variante de réalisation de la figure 4, le passage de sortie 54 traverse la boîte de sortie 16 par un trou de forme allongée comportant un joint d'étanchéité 56 analogue à celui de la figure 2, au lieu de traverser la paroi supérieure de la demi-coquille 6.

## Revendications

1. Module de refroidissement constitué d'un refroidisseur d'air de suralimentation (2) et d'un refroidisseur des gaz d'échappement recirculés (4), le refroidisseur d'air de suralimentation comprenant une boite d'entrée (14) pour l'air à refroidir et une boite de sortie (16) pour l'air refroidi; le refroidisseur (4) des gaz d'échappement recirculés comprenant une boite d'entrée (50) pour les gaz d'échappement recirculés à refroidir et une boite de sortie (52) pour les gaz d'échappement recirculés refroidis, cette boite possédant un passage de sortie (54) des gaz d'échappement recirculés, **caractérisé en ce que** le passage (54) débouche directement dans la boite de sortie (16) du refroidisseur d'air de suralimentation (2) et **en ce que** le refroidisseur d'air de suralimentation (2) comporte une entrée de dérivation (26) de l'air de suralimentation permettant à cet air de suralimentation d'arriver dans la boite de sortie (16) du refroidisseur d'air de suralimentation sans avoir été refroidi et au moins une vanne (84, 88) de répartition de l'air de suralimentation répartissant l'air de suralimentation en proportions réglables entre la boite d'entrée (14) du refroidisseur de l'air de suralimentation et l'entrée de dérivation (26).

2. Module de refroidissement selon la revendication 1, **caractérisé en ce que** le refroidisseur des gaz recirculés comporte une entrée de dérivation (46) des gaz recirculés permettant aux gaz recirculés d'arriver dans la boite de sortie (16) du refroidisseur d'air de suralimentation (2) sans avoir été refroidis, une vanne de répartition (96) des gaz recirculés les répartissant en proportion réglable entre la boite d'entrés (50) du refroidisseur (2) des gaz recirculés et l'entrée de dérivation.

3. Module de refroidissement selon l'une des revendications 1 ou 2, **caractérisé en ce que** le refroidisseur de l'air de suralimentation (2) comporte un déflecteur (60) des gaz d'échappement recirculés, disposé face au passage (54) de sortie des gaz d'échappement recirculés afin de diriger ces gaz vers la boite de sortie (16) du refroidisseur d'air de suralimentation.

4. Module de refroidissement selon l'une des revendications 1 à 3, **caractérisé en ce que** le refroidisseur d'air de suralimentation (2) comporte une enveloppe (6, 7) logeant un faisceau d'échange de chaleur qui comporte une face de fixation présentant une surface agrandie sur laquelle le refroidisseur des gaz recirculés (4) est fixé.

5. Module de refroidissement selon l'une des revendications 1 à 4, **caractérisé en ce que** l'enveloppe du refroidisseur d'air de suralimentation (2) est fermée par une boite d'entrée (14) et une boite de sortie (16) moulées en matière plastique ou en métal.

6. Module de refroidissement selon l'une des revendications 1 à 5, **caractérisé en ce que** le refroidisseur des gaz recirculés (4) comporte une enveloppe constituée de deux demi-carters (32, 34) qui logent un faisceau d'échange de chaleur (30) et qui délimitent de part et d'autre de ce faisceau (30) des espaces libres afin de constituer des boites d'entrée et de sortie (50, 52) pour les gaz recirculés.

7. Module de refroidissement selon l'une des revendications 1 à 6, **caractérisé en ce que** le faisceau d'échange de chaleur des gaz recirculés est constitué par un empilement de plaques qui déterminent entre elles des canaux (31) de circulation des gaz a refroidir et des canaux (33) de circulation d'un liquide de refroidissement, chaque canal (31) de circulation des gaz à refroidir étant compris entre deux canaux (33) de circulation du liquide de refroidissement.

8. Module de refroidissement selon l'une des revendications 4 à 7, **caractérisé en ce que** la face de fixation du refroidissement d'air de suralimentation (2) comporte une platine (8) munie d'un point de fixation (72) du refroidisseur des gaz recirculés (4), cette platine (8) comportant un passage d'entrée (10) et un passage de sortie (12) pour un liquide de refroidissement qui circule en parallèle dans le refroidisseur des gaz recirculés (4) et dans le refroidisseur de l'air de suralimentation (2).

9. Module de refroidissement selon l'une des revendications 1 à 8, **caractérisé en ce que** l'enveloppe du refroidisseur des gaz d'échappement recirculés (4) comporte deux pattes de fixation (66) fixées respectivement à la boite d'entrée (14) et à la boite de sortie (16) du refroidisseur d'air de suralimentation (2).

10. Module de refroidissement selon l'une des revendications 1 à 9, **caractérisé en ce que** le refroidisseur d'air de suralimentation (2) et le refroidisseur des gaz recirculés (4) sont assemblés en une seule opération de brasage et **en ce qu'**ils sont également assemblés l'un à l'autre durant cette même opération de brasage.

## Patentansprüche

1. Kühlmodul, das aus einem Kühler der Ladeluft (2) und einem Kühler der rückgeführten Abgase (4) besteht, wobei der Kühler der Ladeluft ein Eingangsgehäuse (14) für die zu kühlende Luft und ein Ausgangsgehäuse (16) für die gekühlte Luft umfasst; und wobei der Kühler der rückgeführten Abgase (4) ein Eingangsgehäuse (50) für die zu kühlenden rückgeführten Abgase und ein Ausgangsgehäuse (52) für die gekühlten rückgeführten Abgase umfasst, wobei dieses Gehäuse einen Ausgangsdurchgang (54) der rückgeführten Abgase aufweist, **dadurch gekennzeichnet, dass** der Durchgang (54) direkt in dem Ausgangsgehäuse (16) des Kühlers der Ladeluft (2) mündet und dass der Kühler der Ladeluft (2) einen Ableitungseingang (26) der Ladeluft umfasst, der es dieser Ladeluft gestattet, ohne Kühlung in dem Ausgangsgehäuse (16) des Kühlers der Ladeluft anzukommen, und mindestens ein Verteilungsventil (84, 88) der Ladeluft umfasst, die die Ladeluft in regelbaren Anteilen zwischen dem Eingangsgehäuse (14) des Kühlers der Ladeluft und dem Ableitungseingang (26) verteilt.

2. Kühlmodul nach Anspruch 1, **dadurch gekennzeichnet, dass** der Kühler der rückgeführten Gase einen Ableitungseingang (46) der rückgeführten Gase, der es den rückgeführten Gasen gestattet, ohne Kühlung in dem Ausgangsgehäuse (16) des Kühlers der Ladeluft (2) anzukommen, ein Verteilungsventil (96) der rückgeführten Gase umfasst, das sie in regelbarem Anteil zwischen dem Eingangsgehäuse (50) des Kühlers (2) der rückgeführten Gase und dem Ableitungseingang verteilt.

3. Kühlmodul nach einem der Ansprüche 1 oder 2, **dadurch gekennzeichnet, dass** der Kühler der Ladeluft (2) einen Ablenker (60) der rückgeführten Abgase umfasst, der dem Ausgangsdurchgang (54) der rückgeführten Abgase gegenüber angeordnet ist, um diese Gase zu dem Ausgangsgehäuse (16) des Kühlers für Ladeluft umzulenken.

4. Kühlmodul nach einem der Ansprüche 1 bis 3, **dadurch gekennzeichnet, dass** der Kühler der Ladeluft (2) eine Hülle (6, 7) umfasst, die ein Wärmetauscherbündel aufnimmt, welches eine Befestigungsfläche umfasst, die eine vergrößerte Fläche aufweist, auf der der Kühler der rückgeführten Gase (4) befestigt ist.

5. Kühlmodul nach einem der Ansprüche 1 bis 4, **dadurch gekennzeichnet, dass** die Hülle des Kühlers der Ladeluft (2) durch ein Eingangsgehäuse (14) und ein Ausgangsgehäuse (16) geschlossen ist, die aus Kunststoff- oder Metallmaterial geformt sind.

6. Kühlmodul nach einem der Ansprüche 1 bis 5, **dadurch gekennzeichnet, dass** der Kühler der rückgeführten Gase (4) eine aus zwei Halbgehäusen (32, 34) bestehende Hülle usifasst, die ein Wärmetauscherbündel (30) aufnehmen und zu beiden Seiten dieses Bündels (30) Freiräume begrenzen, um das Eingangsgehäuse und das Ausgangsgehäuse (50, 52) für die rückgeführten Gase zu bilden.

7. Kühlmodul nach einem der Ansprüche 1 bis 6, **dadurch gekennzeichnet, dass** das Wärmetauscherbündel der rückgeführten Gase aus einem Stapel aus Platten besteht, die zwischen sich Kanäle (31) zum Zirkulieren der zu kühlenden Gase und Kanäle (33) zum Zirkulieren einer Kühlflüssigkeit bilden, wobei jeder Kanal (31) zum Zirkulieren der zu kühlenden Gase zwischen zwei Kanälen (33) zum Zirkulieren der Kühlflüssigkeit eingeschlossen ist.

8. Kühlmodul gemäß einem der Ansprüche 4 bis 7, dadurch gekenntzeichnet, dass die Befestigtingsfläche des Kühlens von Ladeluft (2) eine mit einer Befestigungsstelle (72) des Kühlers der rückgeführten Gase (4) ausgestattete Platine (8) umfasst, wobei diese Platine (8) einen Eingangsdurchgang (10) und einen Ausgangsdurchgang (12) für eine Kühlflüssigkeit aufweist, die parallel in dem Kühler der rückgeführten Gase (4) und in dem Kühler der Ladeluft (2) zirkuliert.

9. Kühlmodul nach einem der Ansprüche 1 bis 8, **dadurch gekennzeichnet, dass** die Hülle der rückgeführten Abgase (4) zwei jeweils an dem Eingangsgehäuse (14) und an dem Ausgangsgehäuse (16) des Kühlers der Ladeluft (2) befestigte Befestigungslaschen (66) umfasst.

10. Kühlmodul nach einem der Ansprüche 1 bis 9, **dadurch gekennzeichnet, dass** der Kühler der Ladeluft (2) und der Kühler der rückgeführten Gase (4) ein einem einzigen Lötvorgang zusammengesetzt werden und dass sie während desselben Lötvorgangs auch aneinander befestigt werden.

## Claims

1. Cooling module consisting of a supercharging air cooler (2) and a recirculated exhaust gas cooler (4), the supercharging air cooler comprising an inlet manifold (14) for the air to be cooled and an outlet manifold (16) for the cooled air; the recirculated exhaust gas cooler (4) comprising an inlet manifold (50) for the recirculated exhaust gases to be cooled and an outlet manifold (52) for the cooled recirculated. exhaust gases, this manifold having an outlet passage (54) for the recirculated exhaust gases, **characterized in that** the passage (54) discharges directly into the outlet manifold (16) of the supercharging air cooler (2) and **in that** the supercharging air cooler (2) comprises a bypass inlet (26) for the supercharging air enabling this supercharging air to reach the outlet manifold (16) of the supercharging air cooler without having been cooled and at least one valve (84, 88) for distributing the supercharging air, distributing the supercharging air in adjustable proportions between the inlet manifold (14) of the supercharging air cooler and the bypass inlet (26).

2. Cooling module according to Claim 1, **characterized in that** the recirculated gas cooler comprises a bypass inlet (46) for the recirculated gases enabling the recirculated gases to reach the outlet manifold (16) of the supercharging air cooler (2) without having been cooled, a distribution valve (96) of the recirculated gases distributing them in adjustable proportions between the inlet manifold (50) of the recirculated gas cooler (2) and the bypass inlet.

3. Cooling module according to either of Claims 1 or 2, **characterized in that** the supercharging air cooler (2) comprises a recirculated exhaust gas deflector (60) placed opposite the outlet passage (54) of the recirculated exhaust gases in order to send these gases to the outlet manifold (16) of the supercharging air cooler.

4. Cooling module according to one of Claims 1 to 3, **characterized in that** the supercharging air cooler (2) comprises a housing (6, 7) accommodating a heat exchange tube bundle which comprises a fixing side having an enlarged area to which the recirculated gas cooler (4) is fixed.

5. Cooling module according to one of Claims 1 to 4, **characterized in that** the housing of the supercharging air cooler (2) is closed by an inlet manifold (14) and an outlet manifold (16) moulded from plastic or metal.

6. Cooling module according to one of Claims 1 to 5, **characterized in that** the recirculated gas cooler (4) comprises a housing consisting of two half-casings (32, 34) which accommodate a heat exchange tube bundle (30) and which bound free spaces on either side of this tube bundle (30) in order to create inlet and outlet manifolds (50, 52) for the recirculated gases.

7. Cooling module according to one of Claims 1 to 6. **characterized in that** the recirculated gas heat exchange tube bundle consists of a stack of plates which together define flow channels (31) for the gases to be cooled and flow channels (33) for a cooling liquid, each flow channel (31) for the gases to be cooled being comprised between two flow channels (33) for the cooling liquid.

8. Cooling module according to one of Claims 4 to 7, **characterized in that** the fixing side of the supercharging air cooler (2) comprises a plate (8) equipped with a fixing point (72) for the recirculated gas cooler (4), this plate (8) comprising an inlet passage (10) and an outlet passage (12) for a cooling liquid which flows in parallel in the recirculated gas cooler (4) and in the supercharging air cooler (2).

9. Cooling module according to one of Claims 1 to 8, **characterized in that** the housing of the recirculated exhaust gas cooler (4) comprises two fixing brackets (66) fixed respectively to the inlet manifold (14) and to the outlet manifold (16) of the supercharging air cooler (2).

10. Cooling module according to one of Claims 1 to 9, **characterized in that** the supercharging air cooler (2) and the recirculated gas cooler (4) are assembled in a single brazing operation, and **in that** they are also assembled together during this same brazing operation.
